# EUROPÄISCHE PATENTSCHRIFT

(11) **EP 2 923 790 B1**
(45) Veröffentlichungstag und Bekanntmachung des Hinweises auf die Patenterteilung: **11.12.2019**
(21) Anmeldenummer: 14162022.9
(22) Anmeldetag: 27.03.2014
(51) Int. Cl.: B23F 23/12, B23F 9/02

(54) **Verfahren zum schleifenden Bearbeiten von Kegelrädern im Einzelteilverfahren**
Method for grinding bevel gears in a single indexing method
Procédé de meulage de roues coniques dans un procédé de rectification en bout

(43) Veröffentlichungstag der Anmeldung: 30.09.2015
(73) Patentinhaber: Klingelnberg AG, 8050 Zürich (CH)
(72) Erfinder: Müller, Hartmuth, 42857 Remscheid (DE)
(74) Vertreter: Heusch, Christian

(56) Entgegenhaltungen:
- EP-A1- 0 022 586
- DE-C1- 19 517 360
- US-A- 5 136 522
- US-A- 5 297 055

## Beschreibung

Die Erfindung betrifft Verfahren zum Bearbeiten von Kegelrädern unter Einsatz zweier Schleifwerkzeuge im Einzelteilverfahren.

### Stand der Technik

Es ist bekannt, dass man Kegelräder unter Einsatz eines Schleifwerkzeugs bearbeiten kann. Häufig kommen dabei sogenannte Topfschleifscheiben zum Einsatz.

Aus US 5 136 522 ist ein Verfahren zum Schleifen von Kegelrädern bekannt, wobei eine CNC-gesteuerte Schleifprozedur Zahnflanken eines Werkstücks bearbeitet.

Beim Schleifen von Kegelrädern unterscheidet man zwischen dem sogenannten Schleifen im Tauchverfahren für nicht gewälzte Verzahnungen und dem Schleifen im Wälzverfahren für gewälzte Verzahnungen.

Beim Schleifen spiralverzahnter Kegelräder wird die konkave Zahnflanke einer Zahnlücke mit der äußeren Umfangsfläche und die konvexe Zahnflanke der Zahnlücke mit der inneren Umfangsfläche einer Topfschleifscheibe erzeugt. Geschieht dies im Zweiflankenschnitt, auch Completing genannt, was beim Tauchschleifen von Tellerrädern aber auch beim Wälzen von Ritzeln üblich ist, so werden beide Zahnflanken der Zahnlücke gleichzeitig geschliffen. Im Einflankenschliff oder einzelseitigen Verfahren wird hingegen entweder nur die konkave oder nur die konvexe Zahnflanken der Zahnlücke geschliffen.

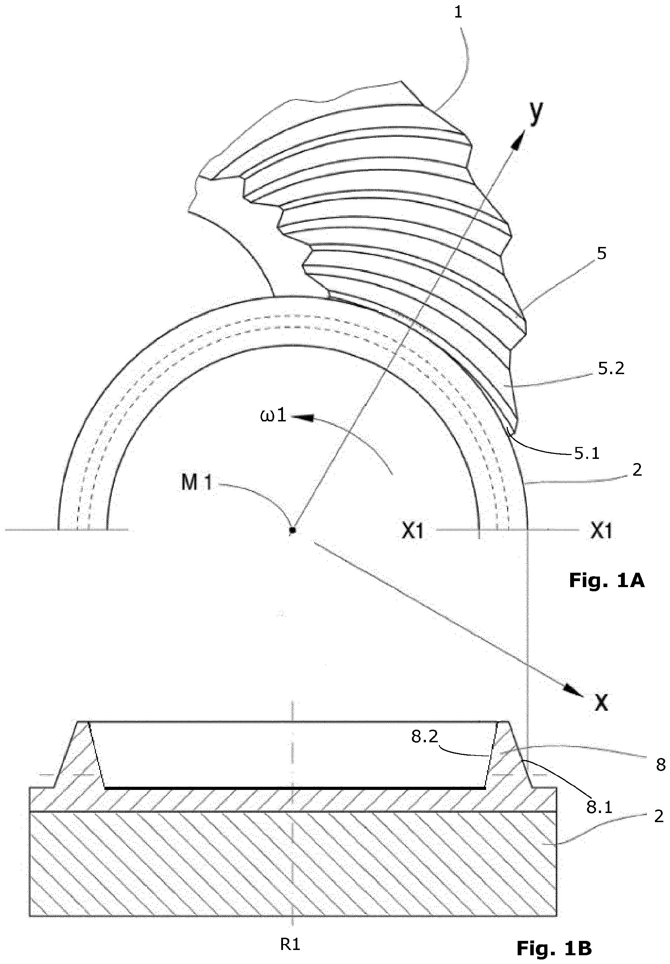

In Fig. 1A ist eine schematische Darstellung eines Ansatzes gezeigt, bei dem sich eine Topfschleifscheibe 2 um einen Scheibenmittelpunkt M1 dreht. Die Rotationsachse R1 der Werkzeugspindel (nicht gezeigt) steht senkrecht zur Zeichenebene und verläuft durch den Scheibenmittelpunkt M1. Die Rotation der Topfschleifscheibe 2 um die Rotationsachse R1 ist in Fig. 1A mit ω1 bezeichnet. Der entsprechende Achsantrieb wird im Folgenden mit A1 bezeichnet. Im gezeigten Moment wird eine konkave Zahnflanke 5.1 des Werkstücks 1 geschliffen.

Fig. 1B zeigt einen schematisch vereinfachten Schnitt entlang der Linie X1-X1 durch einen Teil der Topfschleifscheibe 2, wobei keinerlei in Praxis notwendige und auch vorhandene Abrundungen der Ecken dargestellt sind. In Fig. 1B kann man das asymmetrische Profil 8 der Topfschleifscheibe 2 erkennen. Zum Schleifen der konkaven Zahnflanken 5.1 des Werkstücks 1 kommt die äußere Flanke am Außenumfang 8.1 der Topfschleifscheibe 2 zum Einsatz. Zum Schleifen der konvexen Zahnflanken 5.2 des Werkstücks 1 kommt die innere Flanke am Innenumfang 8.2 der Topfschleifscheibe 2 zum Einsatz.

Es gibt Anwendungsgebiete, bei denen die Anforderungen an die Qualität der Kegelräder besonders hoch sind. Der Aufwand solche Kegelräder zu produzieren ist entsprechend groß und die Maschinen, die zum Einsatz kommen, müssen zahlreiche Kriterien erfüllen.

Häufig kommen beim Einflankenschliff sogenannte Zweispindel-Schleifmaschinen zum Einsatz, die, wie der Name bereits andeutet, zwei Werkzeugspindeln zur Aufnahme je eines Schleifwerkzeugs haben. In einer solchen Zweispindel-Schleifmaschine kann ein Werkstück in einer Aufspannung zuerst mit einem ersten Schleifwerkzeug beispielsweise die konkaven Flanken und anschließend mit einem zweiten Schleifwerkzeug beispielsweise die konvexen Flanken bearbeitet werden. Dadurch, dass kein Umspannen des Werkstücks erforderlich ist, kann man Zahnräder von hoher Qualität herstellen. Da das Werkstück nicht umgespannt werden muss, ist der Rundlauffehler bei der Bearbeitung mit dem ersten Schleifwerkzeug und anschließend bei der Bearbeitung mit dem zweiten Schleifwerkzeug gleich.

Derartige Zweispindel-Schleifmaschinen sind meist sehr spezialisierte Maschinen, die einerseits teuer sind und die andererseits nicht flexibel für andere Bearbeitungsverfahren einsetzbar sind.

Es besteht der Bedarf Kegelräder mit vergleichbarer Qualität auch auf sogenannten Einspindel-Schleifmaschinen produzieren zu können. Leider ist dies auf einer Einspindel-Schleifmaschine bisher nicht oder nur mit großem Aufwand möglich. Außerdem muss bei einer Einspindel-Schleifmaschine ein Wechsel von einem ersten Schleifwerkzeug zu einem zweiten Schleifwerkzeug vollzogen werden, was eine Umrüstzeit bedingt, während der die Maschine nicht einsetzbar ist.

Von daher liegt der Erfindung die Aufgabe zugrunde, einen Ansatz bereit zu stellen, der es ermöglicht eine Einspindel-Schleifmaschine so zu optimieren, dass sie für die produktive und qualitativ hochwertige Bearbeitung von Kegelrädern ausgelegt ist. Vorzugsweise soll die Qualität der bearbeiteten Kegelräder mit der Qualität von Kegelrädern vergleichbar sein, die auf Zweispindel-Schleifmaschinen bearbeitet wurden.

Die Aufgabe wird erfindungsgemäß durch ein Verfahren gemäß Patentanspruch 1 gelöst.

Die Aufgabe wird gelöst durch ein Verfahren zum Schleifen von Kegelrädern, wobei während eines ersten Verfahrensabschnitts eine Topfschleifscheibe als erstes Schleifwerkzeug und während eines zweiten Verfahrensabschnitts eine andere Topfschleifscheibe als zweites Schleifwerkzeug zum Einsatz kommt. Vorzugsweise werden bei allen Ausführungsformen mehrere Kegelräder hintereinander dem ersten Verfahrensabschnitt unterzogen. D.h. diese Kegelräder werden ausgespannt und vor dem zweiten Verfahrensabschnitt erneut aufgespannt. Es kommt ein Messsystem zum Einsatz, um eine Messprozedur durchzuführen, bei der mindestens für einen Teil von ersten Flanken des Kegelradwerkstücks Tastwerte ermittelbar sind, die eine Aussage über den Rundlauffehler dieses Kegelradwerkstücks in der momentanen (erneuten) Aufspannung ermöglichen. Es werden Rundlauf-Korrekturgrößen anhand der Tastwerte rechnerisch ermittelt, und es wird eine Anpassung von Bearbeitungsbewegungen des zweiten Verfahrensabschnitts anhand der Rundlauf-Korrekturgrößen durchgeführt.

Hier ist generell von Schleifwerkzeugen die Rede, auch wenn es im konkreten Fall meistens um Topfschleifscheiben geht, die abrasiv belegt sind.

Erfindungsgemäß wird diese Aufgabe dadurch gelöst, dass ein Verfahren zum Einsatz kommt, das zum Schleifen von Kegelrädern, vorzugsweise von bogenverzahnten Kegelrädern, ausgelegt ist, wobei während eines ersten Verfahrensabschnitts eine Topfschleifscheibe als erstes Schleifwerkzeug und während eines zweiten Verfahrensabschnitts eine andere Topfschleifscheibe als zweites Schleifwerkzeug zum Einsatz kommt. Das Verfahren umfasst die folgenden Schritte, die nicht allesamt in der angegebenen Reihenfolge ausgeführt werden müssen.
a) Befestigen (Einspannen) des ersten Schleifwerkzeugs an einer Werkzeugspindel einer Schleifmaschine,
b) Befestigen (Einspannen) eines ersten Werkstücks an einer Werkstückspindel der Schleifmaschine,
c) CNC-gesteuertes Durchführen einer ersten Einzelteil-Schleifprozedur (im Rahmen des ersten Verfahrensabschnitts) unter Einsatz des ersten Schleifwerkzeugs, wobei im Rahmen der ersten Einzelteil-Schleifprozedur Schritt-für-Schritt alle ersten Zahnflanken des ersten Werkstücks schleifend bearbeitet werden,
d) Trennen (Ausspannen) des ersten Werkstücks von der Werkstückspindel,

Zu einem späteren Zeitpunkt wird das erste Werkstück erneut an der Werkstückspindel dieser oder einer anderen Schleifmaschine und das zweite Schleifwerkzeug an der Werkzeugspindel dieser oder der anderen Schleifmaschine befestigt (d.h. dieser Ansatz kann auch auf eine zweite Schleifmaschine übertragen werden), und es folgen weitere Schritte:
i) Durchführen einer Messprozedur, bei der ein Taster der Schleifmaschine eingesetzt wird, um mindestens für einen Teil der ersten Flanken Tastwerte zu ermitteln, die eine Aussage über den Rundlauffehler in dieser erneuten Aufspannung des ersten Werkstücks ermöglichen,
ii) Rechnerisches (vorzugsweise Rechner-gesteuertes) Ermitteln von Rundlauf-Korrekturgrößen,
iii) CNC-gesteuertes Durchführen einer zweiten Einzelteil-Schleifprozedur (zweiter Verfahrensabschnitt) unter Einsatz des zweiten Schleifwerkzeugs, wobei im Rahmen der zweiten Einzelteil-Schleifprozedur Schritt-für-Schritt alle zweiten Zahnflanken des ersten Werkstücks schleifend bearbeitet werden und wobei eine Anpassung der Bearbeitungsbewegungen der zweiten Einzelteil-Schleifprozedur anhand der Rundlauf-Korrekturgrössen erfolgt.

Gemäss Erfindung umfassen oder repräsentieren die Rundlauf-Korrekturgrößen Angaben oder Größen, die es ermöglichen die zweite Flanke mit dem gleichen Rundlauffehler (in Bezug auf die Größe und Lage) wie die erste Flanke zu schleifen.

Gemäss Erfindung erfolgt bei allen Ausführungsformen die Bearbeitung im Rahmen der zweiten Einzelteil-Schleifprozedur unter Anwendung von Maschineneinstellungen, die anhand der Rundlauf-Korrekturgrößen angepasst wurden.

Die Rundlauffehler der rechten und der linken Flanken können beispielsweise je durch eine periodische Rundlauffehlerkurve grob beschrieben werden. Ohne den Einsatz des erfinderischen Ansatzes können sich die Rundlauffehler (respektive die beiden periodischen Rundlauffehlerkurven) ungünstig (d.h. mit ungünstiger Phasenlage) überlagern, was zu deutlichen Zahndickenfehlern, ungünstigem Laufverhalten und nicht Erreichen der vorgegebenen Qualität am Werkstück führen kann. Die Erfindung verhindert dies.

Gemäss Erfindung erfolgt bei allen Ausführungsformen unter Einsatz der Rundlauf-Korrekturgrößen eine Korrektur der Maschineneinstellungen für jede der Lücken, die im Rahmen der zweiten Einzelteil-Schleifprozedur zu bearbeiten sind.

Gemäss Erfindung wird bei allen Ausführungsformen durch den Einsatz der Messprozedur der Rundlauffehler eines jeden KegelradWerkstücks im erneut eingespannten Zustand ermittelt, bevor die zweite Einzelteil-Schleifprozedur beginnt. Um den Rundlauffehler anpassen zu können, wird beim Ausführen der zweiten Einzelteil-Schleifprozedur quasi ein künstlicher Rundlauffehler appliziert oder dem Rundlauffehler der erneuten Aufspannung überlagert, um so gesamthaft durch geänderte Maschineneinstellungen den Rundlauffehler (on-the-fly) ausgleichen zu können.

Der Rundlauffehler, der sich aus der ersten Einzelteil-Schleifprozedur in der ersten Aufspannung ergeben hat, kann durch eine periodische Rundlauffehlerkurve beschrieben werden, die in einem Winkelbezug zu einer Volldrehung um die Werkstückachse steht. D.h., diese Rundlauffehlerkurve hat eine bestimmte Phasenlage. Beim erneuten Aufspannen des Werkstücks in der Maschine wäre es nur mit extrem großem Aufwand möglich erneut die exakt gleiche Einspannung mit gleichem Rundlauffehler vorzunehmen. In der Praxis ergibt sich beim erneuten Einspannen ein anderer Rundlauffehler. Dieser andere Rundlauffehler kann wiederum durch eine periodische Rundlauffehlerkurve beschrieben werden. Die erste Rundlauffehlerkurve, die sich aus der ersten Einzelteil-Schleifprozedur ergeben hat, und die zweite Rundlauffehlerkurve, die sich aus der zweiten Einzelteil-Schleifprozedur ergeben würde, haben eine unterschiedliche Phasenlage (bezogen auf eine Drehung um die Werkstückachse). Gemäß Erfindung wird daher ein künstlicher Rundlauffehler appliziert oder dem Rundlauffehler der erneuten Aufspannung überlagert, um diesen dem Rundlauffehler der ersten bearbeiteten Flanke anzupassen.

Anhand der Erfindung kann durch ein Verändern/Anpassen der Maschineneinstellungen im Rahmen der zweiten Einzelteil-Schleifprozedur eine Anpassung des Rundlauffehlers der zweiten Flanken in Bezug zu dem Rundlauffehler der ersten Flanken vorgenommen werden.

Die Erfindung ermöglicht es somit Kegelräder in einem diskontinuierlichen Einzelteil-Schleifverfahren in einer Ein-Spindel-Schleifmaschine zu schleifen (oder in zwei Ein-Spindel-Schleifmaschinen), wobei Fehler, die sich aus dem zweimaligen Einspannen eines Werkstücks ergeben, ausgeglichen werden können. Durch den Einsatz der Erfindung können Zahndickenfehler, die sich bisher in einer solchen Konfiguration ergeben hätten, vermieden oder deutlich reduziert werden.

Die Erfindung kommt vorzugsweise in einer CNC-gesteuerten Einspindel-Schleifmaschine zum Einsatz, die einen Rechner zum Ermitteln der Rundlauf-Korrekturgrößen umfasst, oder die mit einem Rechner verbindbar ist, der zum Ermitteln der Rundlauf-Korrekturgrößen ausgelegt ist.

Die Erfindung kommt vorzugsweise zur Feinbearbeitung von vorverzahnten Werkstücken zum Einsatz.

Falls die Erfindung beim Tauchschleifen von Tellerrädern angewendet wird, so reicht es bei der zweiten Einzelteil-Schleifprozedur aus das Eintauchen des Schleifwerkzeugs relativ zu jeder Zahnlücke am Werkstück zu korrigieren (z.B. weniger weit einzutauchen). Beim Wälzschleifen von Ritzeln hingegen sind die Bewegungsabläufe komplizierter und es müssen Zahnlücke-für-Zahnlücken mehrere Maschineneinstellungen/Bewegungsabläufe angepasst werden.

Die Erfindung kann in einer Vorrichtung zum Einsatz kommen, die mindestens eine Maschine mit einer Werkstückspindel zur Aufnahme eines Kegelradwerkstücks (vorzugsweise eines Spiralkegelrad-Werkstücks), einer Werkzeugspindel zur Aufnahme einer Topfschleifscheibe und mit mehreren Antrieben zum Bearbeiten des Kegelradwerkstücks umfasst. Die Maschine ist so ausgelegt, dass die Topfschleifscheibe beim Bearbeiten des Kegelradwerkstücks eine Rotation um die Rotationsachse der Werkzeugspindel ausführt und die Topfschleifscheibe in das Kegelradwerkstücks eingreift, um Material abzutragen. Die Maschine umfasst weiterhin ein Messsystem (z.B. mit taktilem Messtaster, der in Zahnlücken eines in der Maschine eingespannten Werkstücks zustellbar ist), wobei das Messsystem dazu ausgelegt ist einen Rundlauffehler durch das Abtasten/Scannen mehrerer Zahnflanken des Werkstücks zu ermitteln. Weiterhin umfasst die Maschine einen Rechner oder eine Schnittstelle zu einem Rechner, der dazu ausgelegt ist Rundlauf-Korrekturgrößen zu ermitteln (zu berechnen). Die Maschine ist dazu ausgelegt eine erste Einzelteil-Schleifprozedur Schritt-für-Schritt an allen ersten Zahnflanken eines ersten Werkstücks schleifend durchzuführen, wobei durch eine CNC-Steuerung der Maschine die entsprechenden ersten Maschineneinstellungen vorgegeben werden. Die Maschine ist weiterhin dazu ausgelegt eine zweite Einzelteil-Schleifprozedur Schritt-für-Schritt an allen zweiten Zahnflanken des ersten Werkstücks schleifend durchzuführen, wobei durch eine CNC-Steuerung der Maschine die entsprechenden zweiten Maschineneinstellungen unter Berücksichtigung der Rundlauf-Korrekturgrößen vorgegeben werden.

Die Vorrichtung zeichnet sich dadurch aus, dass die ersten Maschineneinstellungen für das schleifende Bearbeiten von baugleichen Zahnrädern eines ersten Produktionsloses allesamt gleich sind. Die zweiten Maschineneinstellungen für das schleifende Bearbeiten der baugleichen Zahnräder des ersten Produktionsloses im Rahmen der zweiten Einzelteil-Schleifprozedur können jedoch bei jedem Zahnrad des Loses anders sein. Das ergibt sich daraus, dass jedes dieser Zahnräder beim erneuten Aufspannen einen anderen Rundlauffehler haben kann.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben.
- **FIG. 1A**: zeigt eine stark schematisierte Ansicht einer Topfschleifscheibe, die in bekannter Art und Weise gelagert ist und die eine konkave Flanke einer Zahnlücke eines Tellerrad-Werkstücks bearbeitet;
- **FIG. 1B**: zeigt eine stark schematisierte Schnittansicht der Topfschleifscheibe nach Fig. 1A entlang der Schnittlinie X1-X1;
- **FIG. 2**: zeigt eine schematisierte Ansicht eines Teils einer ersten erfindungsgemäßen Schleifmaschine mit einer Topfschleifscheibe, die auf einer Werkzeugspindel drehbar gelagert ist, und mit einem zu bearbeitenden Kegelradwerkstück, das auf einer Werkstückspindel drehbar gelagert ist, wobei sich im gezeigten Moment die Topfschleifscheibe und das Kegelradwerkstück nicht im Eingriff befinden;
- **FIG. 3**: zeigt eine vereinfachte perspektivische Ansicht einer zweiten erfindungsgemäßen Schleifmaschine mit einer hängend angeordneten Topfschleifscheibe, die auf einer Werkzeugspindel drehbar gelagert ist, und mit einem zu bearbeitenden Kegelradwerkstück, das auf einer Werkstückspindel drehbar gelagert ist, wobei sich im gezeigten Moment die Topfschleifscheibe und das Kegelradwerkstück nicht im Eingriff befinden;
- **FIG. 4A**: zeigt eine grafische Darstellung der Summenabweichung der Zahnlücken eines Kegelrads, wobei die Abweichungen der konvexen Flanken oben und die Abweichungen der konkaven Flanken unten in der Darstellung gezeigt sind;
- **FIG. 4B**: zeigt eine grafische Darstellung zweier Kurvenzüge, wobei der Kurvenzug der konvexen Flanken oben und der Kurvenzug unten in der Darstellung gezeigt sind;
- **FIG. 5A**: zeigt eine grafische Darstellung der Summenabweichung der Zahnlücken eines Kegelrads, das gemäß Erfindung bearbeitet wurde, wobei die Abweichungen der konvexen Flanken oben und die Abweichungen der konkaven Flanken unten in der Darstellung gezeigt sind;
- **FIG. 5B**: zeigt eine grafische Darstellung zweier Kurvenzüge, wobei der Kurvenzug der konvexen Flanken oben und der Kurvenzug unten in der Darstellung gezeigt sind.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

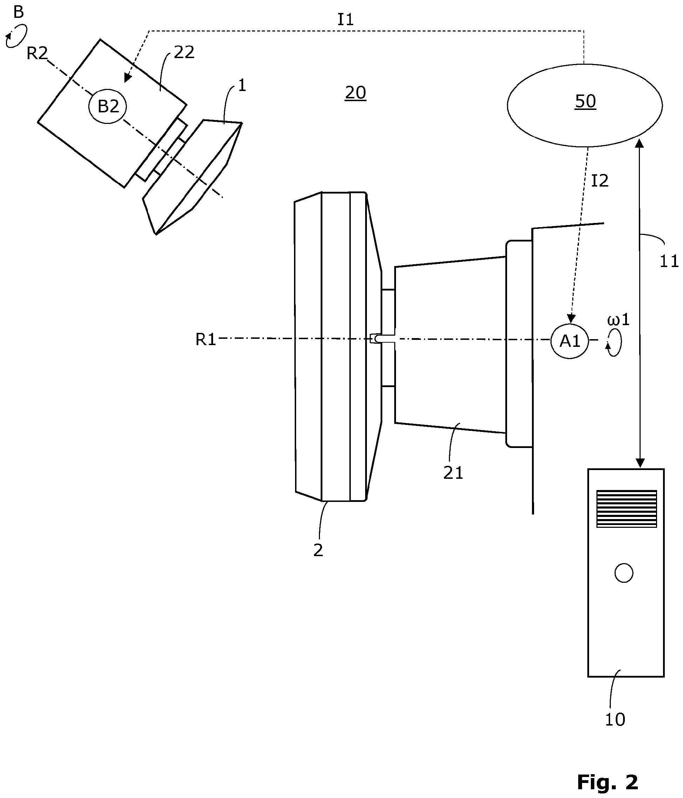

Eine Vorrichtung 20 umfasst, wie in Fig. 2 schematisch gezeigt, eine Werkstückspindel 22, die zur Aufnahme eines Kegelradwerkstücks 1 (hier in Form eines stilisiert dargestellten Tellerrads) ausgelegt ist. Ausserdem umfasst sie eine Werkzeugspindel 21 zur Aufnahme eines Schleifwerkzeugs 2 (hier in Form einer Topfschleifscheibe) sowie mehrere Antriebe (z.B. B1, B2 und weitere Antriebe, die nicht in den Figuren gezeigt sind) zum Bearbeiten des Kegelradwerkstücks 1. Das Schleifwerkzeug 2 führt beim Bearbeiten des Kegelradwerkstücks 1 eine Rotation ω1 um die Rotationsachse R1 der Werkzeugspindel 21 aus. Der entsprechende Achsantrieb ist mit A1 bezeichnet. Das Schleifwerkzeug 2 greift in das Kegelradwerkstück 1 ein, wie z.B. in Fig. 1A anhand eines spiralverzahnten Tellerrads gezeigt, um Material abzutragen. Da es sich um ein sogenanntes Einzelteil-Schleifverfahren handelt, führt das Kegelradwerkstück 1 nach jeder Bearbeitung einer Flanke einer Zahnlücke eine Teilungsdrehung B um die Rotationsachse R2 aus. Es handelt sich also um ein diskontinuierliches Verfahren. So werden z.B. alle konkaven Flanken 5.1 aller Zähne 5 Schritt für Schritt bearbeitet (siehe Fig. 1A). Weiterhin ist eine CNC-Steuerung 50 gezeigt, die dazu ausgelegt ist die Bewegungsabläufe in der Maschine 20 zu steuern, wie durch die Steuersignale I1, I2 angedeutet.

Weiterhin ist ein Rechner 10 gezeigt, der speziell dazu ausgelegt (programmiert) ist Rundlauf-Korrekturgrößen gemäß Erfindung zu ermitteln. Der Rechner 10 ist kommunikationstechnisch mit der Maschine 20 und/oder der Steuerung 50 verbunden, wie in Fig. 2 durch die Verbindung 11 angedeutet. Der Rechner 10 muss nicht zwingend bei den Ausführungsformen der Erfindung als vollständiger Rechner ausgeführt sein. Es kann auch bei allen Ausführungsformen ein Rechnermodul, ein Chipmodul oder eine Steckkarte mit Prozessor oder dergleichen eingesetzt werden. Der Rechner 10 kann bei allen Ausführungsformen auch Teil der Steuerung 50 sein, oder die Steuerung 50 kann Teil des Rechners 10 sein.

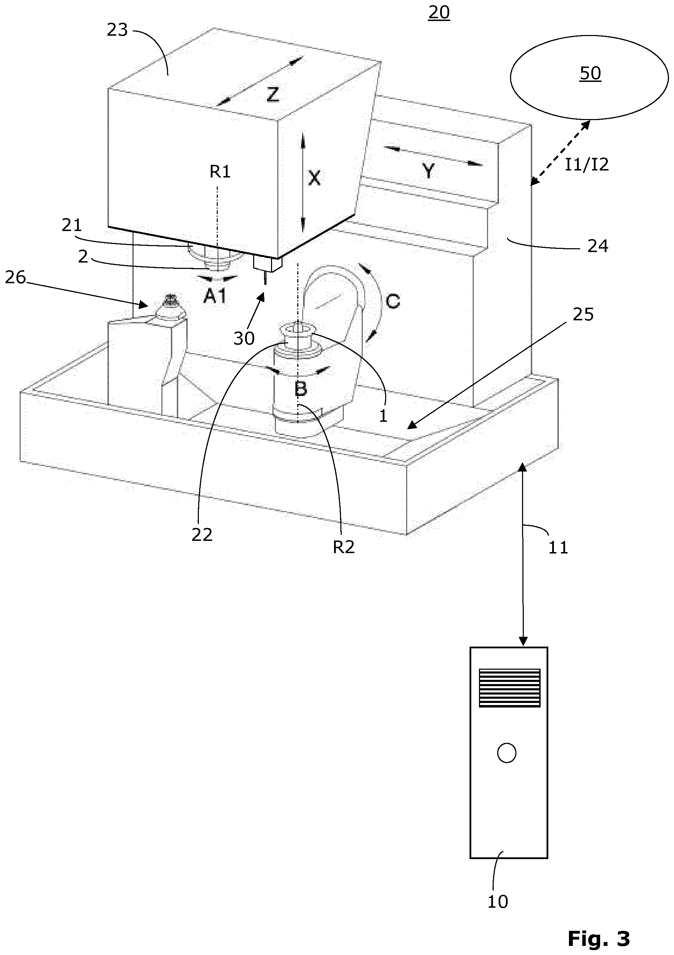

Fig. 3 zeigt eine perspektivische Ansicht einer zweiten Schleifmaschine 20 mit einer hängend angeordneten Topfschleifscheibe 2, die auf einer Werkzeugspindel 21 drehbar gelagert ist, und mit einem zu bearbeitenden Kegelradwerkstück 1, das auf einer Werkstückspindel 22 drehbar gelagert ist, wobei sich im gezeigten Moment die Topfschleifscheibe 2 und das Kegelradwerkstück 1 nicht im Eingriff befinden. Die Aussagen, die zuvor in Bezug auf den Rechner 10 gemacht wurden, sind auch hier anzuwenden.

Die in Fig. 3 beispielhaft gezeigte Einspindel-Schleifmaschine 20 umfasst weiterhin einen Werkzeugschlitten 23, der parallel zur Linearachse Y und zur Linearachse Z verschiebbar an einem Maschinenständer 24 gelagert ist. Die Maschine 20 weist eine weitere Linearachse auf, die als X-Achse bezeichnet ist. Zusätzlich umfasst diese Maschine 20 eine Schwenkachse C, die ein Schwenken der Werkstückspindel 22 samt Werkstück 1 ermöglicht. Die Maschine 20 hat im gezeigten Beispiel einen Auffangbereich 25 für Späne und einen Abrichter 26, der zum CNC-gesteuerten Abrichten/Profilieren des Schleifwerkzeugs 2 eingesetzt werden kann. Diese Komponenten sind optional. Weiterhin ist eine CNC-Steuerung 50 gezeigt, die dazu ausgelegt ist die Bewegungsabläufe in der Maschine 20 zu steuern, wie durch die Steuersignale I1, I2 angedeutet. Auch bei dieser Ausführungsform kann ein Rechner 10 Teil der Steuerung 50 sein, oder die Steuerung 50 kann Teil eines Rechners 10 sein.

Vorzugsweise ist die Maschine 20 mit einem taktilen Messtaster 30 ausgestattet, wie in Fig. 3 angedeutet. Die Maschine 20 der Erfindung kann aber auch ein anderes Messsystem (z.B. ein optisches Messsystem) umfassen, das dazu ausgelegt ist den Rundlauffehler der Verzahnung durch Messungen am erneut eingespannten Werkstück 1 zu ermitteln.

Das Messsystem muss dazu ausgelegt sein, die Zahnflanken (z.B. die konkaven Flanken 5.1) abzutasten oder zu vermessen, um daraus den Rundlauffehler am erneut eingespannten Werkstück 1 zu ermitteln oder um (Mess-)Größen zu ermitteln, die mit dem Rundlauffehler korreliert sind.

Falls ein taktiler Messtaster 30 zum Einsatz kommt, so kann es sich um einen scannenden Messtaster 30 handeln oder es kann sich um einen schaltenden Messtaster handeln.

Das Messsystem der Erfindung kann bei allen Ausführungsformen so an der Maschine 20 angeordnet sein, dass der Messtaster 30 (oder z.B. ein optischer Taster oder ein CCD-Element) zusammen mit den Hauptachsen X, Y, Z der Maschine 20 bewegt wird.

Das Messsystem der Erfindung kann bei allen Ausführungsformen so an der Maschine 20 angeordnet sein, dass der Messtaster 30 (oder z.B. ein optischer Taster oder ein CCD-Element) eigene Bewegungsachsen aufweist. Es ist bei allen Ausführungsformen auch eine Kombination möglich, bei welcher der Messtaster 30 (oder z.B. ein optischer Taster oder ein CCD-Element) zum Teil eigene Bewegungsachsen aufweist und zum Teil auf die Hauptachsen der Maschine 20 angewiesen ist.

Vorzugsweise ist die Maschine 20 bei allen Ausführungsformen mit einem Präzisionsmessinstrument als Messsystem ausgestattet.

Die Einspindel-Schleifmaschine 20 der Fig. 3 ist speziell zum Schleifen spiralverzahnter Kegelräder ausgelegt. In dieser Maschine 20 kann das Verfahren der Erfindung besonders vorteilhaft implementiert werden.

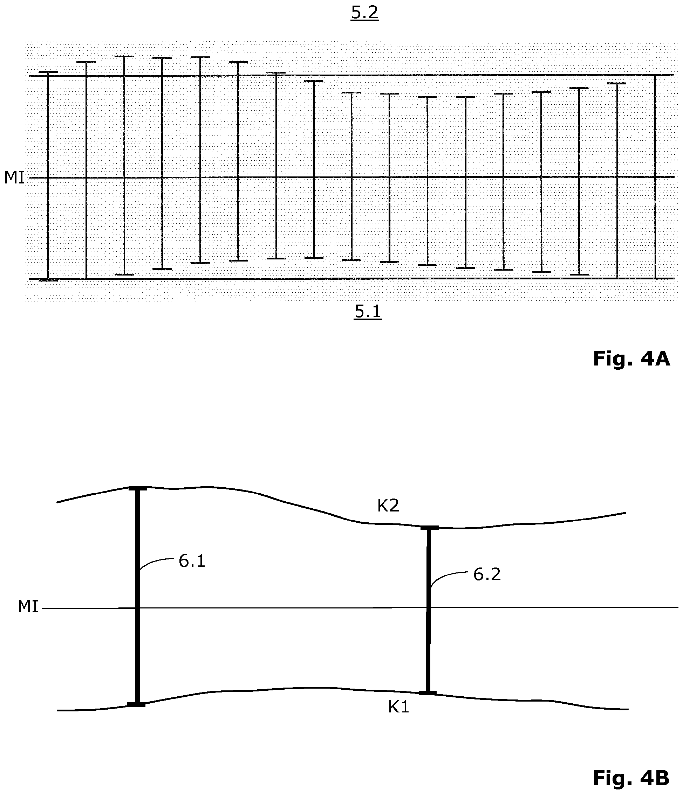

Fig. 4A zeigt eine grafische Darstellung der Summenabweichung der Zahnlücken eines Kegelrads, wobei die Abweichungen der konvexen Flanken 5.2 oben und die Abweichungen der konkaven Flanken 5.1 unten in der Darstellung gezeigt sind. MI stellt die Mittellinie dar. Diese Summenabweichung wurde mittels eines Messsystems an einem Werkstück ermittelt, das in einer ersten Aufspannung in einer Maschine einer ersten Einzelteil-Schleifprozedur unterzogen wurde. Im Rahmen der ersten Einzelteil-Schleifprozedur wurden hier Schritt-für-Schritt alle konvexen Flanken 5.2 des Werkstücks bearbeitet. Nach einem Entnehmen des Werkstücks aus der Maschine und nach einem erneuten Aufspannen des Werkstücks in der Maschine, wurden alle konkaven Flanken 5.1 des Werkstücks einer zweiten Einzelteil-Schleifprozedur unterzogen. Im Rahmen dieser zweiten Einzelteil-Schleifprozedur wurden hier Schritt-für-Schritt alle konkaven Flanken 5.1 des Werkstücks bearbeitet.

In diesem Beispiel wurde keine Anpassung des Rundlauffehlers vorgenommen. D.h. es wurde das Prinzip der Erfindung hier nicht zur Anwendung gebracht.

Fig. 4B zeigt eine grafische Darstellung zweier Kurvenzüge K1, K2, wobei der Kurvenzug K2 der konvexen Flanken 5.2 oben und der Kurvenzug K1 der konkaven Flanken 5.1 unten in der Darstellung gezeigt sind. Die Mittellinie MI und die Lage/der Verlauf der beiden Kurvenzüge K1, K2 wurde aus Fig. 4A entnommen.

Die beiden Kurvenzüge K1, K2, respektive die Rundlauffehlerkurven haben den Verlauf einer periodischen Kurve oder sie können z.B. aus einer Sinuskurve abgeleitet werden. Aus Fig. 4B ist zu entnehmen, dass die Phasenlage des Kurvenzugs K1 verschoben ist gegenüber der Phasenlage des Kurvenzugs K2. Dies ergibt sich daraus, dass der Rundlauffehler in der ersten Aufspannung des Werkstücks anders ist als der Rundlauffehler des Werkstücks in der zweiten erneuten Aufspannung. Nur in wenigen Fällen wird beim erneuten Aufspannen exakt der gleich Rundlauffehler vorgegeben wie beim ersten Aufspannen.

In Fig. 4B sind zwei Zahnlücken 6.1 und 6.2 beispielhaft eingezeichnet. Die Länge der jeweiligen Linienabschnitten entspricht der Lückenweite der jeweiligen Zahnlücke 6.1, 6.2. Dadurch, dass die beiden Kurvenzüge K1, K2 nicht phasengleich verlaufen, kann sich in einem ungünstigen Fall, wie in Fig. 4A und 4B gezeigt, eine große Schwankung der Lückenweiten ergeben. Derartige Schwankungen der Lückenweite, respektive der Zahndicke, die dazu in einem direkten Bezug steht, ist für viele Anwendungen nicht akzeptabel.

Es ist zu beachten, dass die Darstellungen der Figuren 4A bis 5B überhöht sind. Sie zeigen nur die jeweiligen Abweichungen bezogen auf die Mittellinie MI.

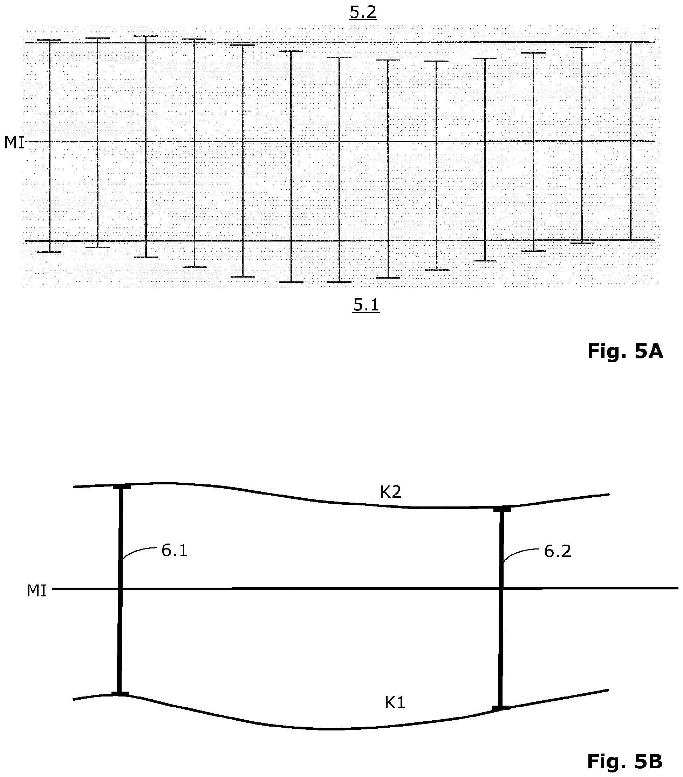

Fig. 5A zeigt nun eine grafische Darstellung der Summenabweichung der Zahnlücken eines Kegelrads 1, das gemäß Erfindung bearbeitet wurde. Die Abweichungen der konvexen Flanken 5.2 sind oben und die Abweichungen der konkaven Flanken 5.1 sind unten in der Darstellung gezeigt. Die Summenabweichung wurde mittels eines Messsystems an einem Werkstück 1 ermittelt, das in einer ersten Aufspannung in einer Maschine 20 einer ersten Einzelteil-Schleifprozedur unterzogen wurde. Im Rahmen der ersten Einzelteil-Schleifprozedur wurden hier Schritt-für-Schritt alle konvexen Flanken 5.2 des Werkstücks 1 bearbeitet. Nach einem Entnehmen des Werkstücks 1 aus der Maschine 20 und nach einem erneuten Aufspannen des Werkstücks 1 in der Maschine 20, wurden alle konkaven Flanken 5.1 des Werkstücks 1 einer zweiten Einzelteil-Schleifprozedur unterzogen. Zuvor wurde jedoch durch ein Messsystem der Maschine 20 eine Messung der Rundlauffehlers oder von (Mess-)Größen vorgenommen, die mit dem Rundlauffehler korreliert sind.

Gemäss Erfindung wird diese Messung nach dem erneuten Aufspannen des Werkstücks 1 an denjenigen Flanken des Werkstücks 1 vorgenommen, die im Rahmen der ersten Einzelteil-Schleifprozedur bearbeitet wurden.

Nachdem rechnerisch (vorzugsweise Rechner-gesteuert) Rundlauf-Korrekturgrößen für dieses Werkstück 1 ermittelt wurden, erfolgt das CNC-gesteuertes Durchführen der zweiten Einzelteil-Schleifprozedur unter Einsatz des zweiten Schleifwerkzeugs. Im Rahmen der zweiten Einzelteil-Schleifprozedur werden Schritt-für-Schritt alle zweiten Zahnflanken des ersten Werkstücks 1 schleifend bearbeitet und es werden dabei Anpassungen der Bearbeitungsbewegungen der zweiten Einzelteil-Schleifprozedur anhand der Rundlauf-Korrekturgrössen vorgenommen.

Fig. 5B zeigt eine grafische Darstellung zweier Kurvenzüge K1, K2, respektive Rundlauffehlerkurven, wobei der Kurvenzug K2 der konvexen Flanken 5.2 oben und der Kurvenzug K1 der konkaven Flanken 5.1 unten in der Darstellung gezeigt sind. Die Mittellinie MI und die Lage der beiden Kurvenzüge K1, K2 wurden aus Fig. 5A entnommen.

Die beiden Kurvenzüge K1, K2 haben wiederum den Verlauf einer periodischen Kurve (sie können z.B. aus einer sinusartigen Kurve abgeleitet werden). Aus Fig. 5B ist zu entnehmen, dass die Phasenlage des Kurvenzugs K1 kaum gegenüber der Phasenlage des Kurvenzugs K2 verschoben ist. Die beiden Kurvenzüge der Fig. 5B haben nahezu die gleiche Phasenlage. Das wurde durch den Einsatz des erfindungsgemäßen Verfahrens erreicht.

In Fig. 5B sind zwei Zahnlücken 6.1 und 6.2 beispielhaft eingezeichnet. Dadurch, dass die beiden Kurvenzüge K1, K2 phasengleich oder im Wesentlichen phasengleich verlaufen, weichen die Lückenweiten nicht mehr großartig voneinander ab.

Anhand dieses Beispiels konnte gezeigt werden, dass man auch mit einem Verfahren der Erfindung, respektive mit einer Maschine 20, die gemäß Erfindung ausgelegt/programmiert ist, Kegelräder so schleifend bearbeiten kann, dass sie trotz des Ausspannens und des erneuten Einspannens vergleichbar sind mit Zahnrädern, die in konventioneller Art und Weise auf einer Zweispindel-Schleifmaschine geschliffen wurden.

**Bezugszeichen:**

| | |
|---|---|
| Tellerrad | 1 |
| Schleifwerkzeug / Schleiftopf | 2.1 |
| Schleifwerkzeug / Schleiftopf | 2.2 |
| Schleifwerkzeug | 2 |
| | |
| Zahn | 5 |
| Konkave Zahnflanke | 5.1 |
| Konvexe Zahnflanke | 5.2 |
| Erste Zahnlücke | 6.1 |
| Zweite Zahnlücke | 6.2 |
| Profil | 8 |
| Außenumfang | 8.1 |
| Innenumfang | 8.2 |
| | |
| Rechner (intern oder extern) | 10 |
| Kommunikationstechnische Verbindung (z.B. über Netzwerk) | 11 |
| | |
| Schleifmaschine | 20 |
| Werkzeugspindel | 21 |
| Werkstückspindel | 22 |
| Werkzeugschlitten | 23 |
| Maschinenständer | 24 |
| Auffangbereich | 25 |
| Abrichter | 26 |
| | |
| Taster / Messsystem | 30 |
| | |
| CNC-Steuerung | 50 |
| | |
| Rotationsantrieb/-achse | A1 |
| Antrieb | B2 |
| Steuersignale | I1, I2 |
| Kurvenzüge | K1, K2 |
| Scheibenmittelpunkt | M1 |
| Mittellinie | MI |
| Rotationsachse | R1 |
| Rotationsachse | R2 |
| Rotation um R2 | B |
| Schwenkachse | C |
| Schnittlinie | X1 - X1 |
| Koordinatensystem | x, y |
| Linearachsen | X, Y, Z |
| Winkelgeschwindigkeit um R1 | ω1 |

## Patentansprüche

1. Verfahren zum Schleifen von Kegelrädern (1), wobei während eines ersten Verfahrensabschnitts eine Topfschleifscheibe als erstes Schleifwerkzeug (2.1) und während eines zweiten Verfahrensabschnitts eine andere Topfschleifscheibe als zweites Schleifwerkzeug (2.2) zum Einsatz kommt, mit den folgenden Schritten
a) Befestigen des ersten Schleifwerkzeugs (2.1) an einer Werkzeugspindel (21) einer Schleifmaschine (20),
b) Befestigen eines ersten Werkstücks (1) an einer Werkstückspindel (22) der Schleifmaschine (20),
c) CNC-gesteuertes Durchführen einer ersten Einzelteil-Schleifprozedur unter Einsatz des ersten Schleifwerkzeugs (2.1), wobei im Rahmen der ersten Einzelteil-Schleifprozedur Schritt-für-Schritt alle ersten Zahnflanken (5.1) des ersten Werkstücks (1) schleifend bearbeitet werden,
d) Trennen des ersten Werkstücks (1) von der Werkstückspindel (22),
wobei zu einem späteren Zeitpunkt das erste Werkstück (1) erneut an einer Werkstückspindel einer Schleifmaschine befestigt wird, die das zweite Schleifwerkzeug (2.2) an einer Werkzeugspindel trägt, wobei ein Rundlauffehler in der ersten Aufspannung des Werkstücks (1) anders ist als ein Rundlauffehler des Werkstücks (1) in der zweiten erneuten Aufspannung, gefolgt von den Schritten:
i) Durchführen einer Messprozedur, bei der ein Taster (30) der Schleifmaschine (20) eingesetzt wird, um mindestens für einen Teil der ersten Flanken (5.1), die im Rahmen der ersten Einzelteil-Schleifprozedur bearbeitet wurden, Tastwerte zu ermitteln, die eine Aussage über den Rundlauffehler des ersten Werkstücks (1) in dieser erneuten Aufspannung ermöglichen,
ii) rechnerisches Ermitteln von Rundlauf-Korrekturgrößen,
iii) CNC-gesteuertes Durchführen einer zweiten Einzelteil-Schleifprozedur unter Einsatz des zweiten Schleifwerkzeugs (2.2), wobei im Rahmen der zweiten Einzelteil-Schleifprozedur Schritt-für-Schritt alle zweiten Zahnflanken (5.2) des ersten Werkstücks (1) schleifend bearbeitet werden und wobei eine Anpassung von Bearbeitungsbewegungen der zweiten Einzelteil-Schleifprozedur anhand der Rundlauf-Korrekturgrössen vorgenommen wird.

2. Verfahren nach Anspruch 1, **dadurch gekennzeichnet, dass** durch das Ermitteln von Rundlauf-Korrekturgrößen und das Anwenden der Rundlauf-Korrekturgrößen Dickenfehler bei den Zähnen (6) des Werkstücks (1) reduziert oder vermieden werden.

3. Verfahren nach Anspruch 1 oder 2, **dadurch gekennzeichnet, dass** im Rahmen der ersten Einzelteil-Schleifprozedur andere Maschineneinstellungen zur Anwendung kommen als im Rahmen der zweiten Einzelteil-Schleifprozedur, wobei die Maschineneinstellungen der zweiten Einzelteil-Schleifprozedur durch das Anwenden der Rundlauf-Korrekturgrößen angepasst wurden.

4. Verfahren nach Anspruch 1, 2 oder 3, **dadurch gekennzeichnet, dass** die ersten Zahnflanken (5.1) einen anderen Krümmungsradius aufweisen als die zweiten Zahnflanken (5.2).

5. Verfahren nach Anspruch 1, 2 oder 3, **dadurch gekennzeichnet, dass** es sich um bogenverzahnte Kegelräder (1) handelt.

6. Verfahren nach Anspruch 1, 2, 3 oder 5, **dadurch gekennzeichnet, dass** nacheinander mehrere Werkstücke eines Loses erst dem ersten Einzelteil-Schleifprozedur unter Einsatz des ersten Schleifwerkzeugs (2.1) unterzogen werden, um dann nacheinander Werkstück für Werkstück erneut aufzuspannen und der zweiten Einzelteil-Schleifprozedur unter Einsatz des zweiten Schleifwerkzeugs (2.2) zu unterziehen, wobei zuvor individuell für jedes Werkstück des Loses Rundlauf-Korrekturgrößen ermittelt werden.

7. Verfahren nach einem der Ansprüche 1 bis 6, **dadurch gekennzeichnet, dass** es in einer Einspindel-Kegelradschleifmaschine (20) zu Anwendung kommt.

## Claims

1. A method for grinding bevel gears (1), wherein a cup grinder is used as first grinding tool (2.1) during a first method section and another cup grinder is used as second grinding tool (2.2) during a second method section, having the following steps:
a) fastening the first grinding tool (2.1) on a tool spindle (21) of a grinding machine (20),
b) fastening a first workpiece (1) on a workpiece spindle (22) of the grinding machine (20),
c) CNC-controlled performance of a first single-indexing grinding procedure using the first grinding tool (2.1), wherein all first tooth flanks (5.1) of the first workpiece (1) are machined by grinding step-by-step in the scope of the first single-indexing grinding procedure,
d) separating the first workpiece (1) from the workpiece spindle (22),
wherein, at a later point in time, the first workpiece (1) is re-chucked on the workpiece spindle of a grinding machine, which carries the second grinding tool (2.2) on a tool spindle, whereby a concentricity error of the first chucking of the workpiece (1) is different with respect to a concentricity error of the workpiece (1) of the second re-chucking, followed by the following steps:
i) performance of a measurement procedure, in which a sensor (30) of the grinding machine (20) is used, to ascertain sampling values, enabling a statement about the concentricity error of the first workpiece (1) in this re-chucking, at least for a part of the first flanks (5.1), which have been machined in the scope of the first single-indexing grinding procedure,
ii) computer ascertainment of concentricity correction dimensions,
iii) CNC-controlled performance of a second single-indexing grinding procedure using the second grinding tool (2.2), wherein all second tooth flanks (5.2) of the first workpiece (1) are machined by grinding step-by-step in the scope of the second single-indexing grinding procedure, and wherein an adaptation of machining movements of the second single-indexing grinding procedure is performed on the basis of the concentricity correction dimensions.

2. The method according to claim 1, **characterized in that** thickness errors in the teeth (6) of the workpiece (1) are reduced or prevented by the ascertaining of concentricity correction dimensions and applying the concentricity correction dimensions.

3. The method according to claim 1 or 2, **characterized in that** different machine settings are applied in the scope of the first single-indexing grinding procedure than in the scope of the second single-indexing grinding procedure, wherein the machine settings of the second single-indexing grinding procedure were adapted by the application of the concentricity correction dimensions.

4. The method according to claim 1, 2, or 3, **characterized in that** the first tooth flanks (5.1) have a different radius of curvature than the second tooth flanks (5.2).

5. The method according to claim 1, 2, or 3, **characterized in that** it relates to spiral-toothed bevel gears (1).

6. The method according to claim 1, 2, 3, or 5, **characterized in that** multiple work pieces of a first batch are first successively subjected to the first single-indexing grinding procedure using the first grinding tool (2.1), to then be re-chucked successively, workpiece by workpiece, and subjected to the second single-indexing grinding procedure using the second grinding tool (2.2), wherein concentricity correction dimensions were previously ascertained individually for each workpiece of the batch.

7. The method according to one of claims 1 to 6, **characterized in that** it is applied in a single-spindle bevel gear grinding machine (20).

## Revendications

1. Procédé pour meuler des roues coniques (1), dans lequel, pendant une première étape de la procédure, on utilise une meule-boisseau comme premier outil de meulage (2.1), et pendant une deuxième étape de la procédure on utilise une autre meule-boisseau comme deuxième outil de meulage (2.2), comprenant les étapes suivantes consistant à :
a) fixer le premier outil de meulage (2.1) sur une broche d'outil (21) d'une meuleuse (20),
b) fixer une première pièce à usiner (1) sur une broche de pièce (22) de la meuleuse (20),
c) effectuer par commande CNC une première procédure de meulage de pièce en utilisant le premier outil de meulage (2.1), dans le cadre de la première procédure de meulage de pièce tous les premiers flancs de dents (5.1) de la première pièce à usiner (1) étant usinés par meulage pas à pas,
d) ôter la première pièce à usiner (1) de la broche de pièce (22),
dans lequel, plus tard, la première pièce à usiner (1) est de nouveau fixée à une broche de pièce d'une meuleuse, qui porte le deuxième outil de meulage (2.2) sur une broche d'outil, un faux-rond dans la première fixation de la pièce à usiner (1) étant différent d'un faux-rond de la pièce à usiner (1) dans la deuxième fixation, avec ensuite les étapes consistant à :
i) effectuer une procédure de mesure, dans laquelle on utilise un palpeur (30) de la meuleuse (20) pour déterminer des grandeurs de palpage au moins pour une partie des premiers flancs (5.1) qui ont été usinés dans le cadre de la première procédure de meulage de pièce, grandeurs qui permettent de donner une information sur le faux-rond de la première pièce à usiner (1) dans cette nouvelle fixation,
ii) déterminer par calcul les grandeurs de correction de concentricité,
iii) effectuer par commande CNC une deuxième procédure de meulage de pièce en utilisant le deuxième outil de meulage (2.2), dans le cadre de la deuxième procédure de meulage de pièce tous les deuxièmes flancs de dents (5.2) de la première pièce à usiner (1) étant usinés par meulage pas à pas, une adaptation des mouvements d'usinage de la deuxième procédure de meulage de pièce intervenant au moyen des grandeurs de correction de concentricité.

2. Procédé selon la revendication 1, **caractérisé en ce que** la détermination de grandeurs de correction de concentricité et l'application des grandeurs de correction de concentricité permettent de réduire ou d'éviter les erreurs d'épaisseur sur les dents (6) de la pièce à usiner (1).

3. Procédé selon la revendication 1 ou 2, **caractérisé en ce que**, dans le cadre de la première procédure de meulage de pièce, on utilise d'autres réglages de machine que dans le cadre de la deuxième procédure de meulage de pièce, les réglages de machine de la deuxième procédure de meulage de pièce étant adaptés en appliquant les grandeurs de correction de concentricité.

4. Procédé selon la revendication 1, 2 ou 3, **caractérisé en ce que** les premiers flancs de dents (5.1) présentent un rayon de courbure différent des deuxièmes flancs de dents (5.2).

5. Procédé selon la revendication 1, 2 ou 3, **caractérisé en ce qu'**il s'agit de roues coniques (1) à denture courbe.

6. Procédé selon la revendication 1, 2, 3 ou 5, **caractérisé en ce que**, les unes après les autres, plusieurs pièces à usiner d'un lot sont soumises d'abord à la première procédure de meulage de pièce en utilisant le premier outil de meulage (2.1) pour ensuite être de nouveau fixées les unes après les autres, pièce par pièce, et être soumises à la deuxième procédure de meulage de pièce en utilisant le deuxième outil de meulage (2.2), des grandeurs de correction de concentricité étant déterminées préalablement individuellement pour chaque pièce à usiner du lot.

7. Procédé selon l'une des revendications 1 à 6, **caractérisé en ce qu'**on utilise une rectifieuse d'engrenages coniques à une broche (20).
